Europäisches Patentamt

European Patent Office

Office européen des brevets

(11) Veröffentlichungsnummer: **0 578 259 A1**

## (12) EUROPÄISCHE PATENTANMELDUNG

(21) Anmeldenummer: **93111039.9**

(22) Anmeldetag: **09.07.93**

(51) Int. Cl.5: **C02F 1/26**

(30) Priorität: **10.07.92 DE 4222783**

(43) Veröffentlichungstag der Anmeldung:
**12.01.94 Patentblatt 94/02**

(84) Benannte Vertragsstaaten:
**CH FR GB LI**

(71) Anmelder: OVF Glastechnik GmbH
**Schossbergstrasse 11**
**D-65201 Wiesbaden(DE)**

(72) Erfinder: **Lorenz, Markus**
**Platterstrasse 11a**
**D-65193 Wiesbaden(DE)**
Erfinder: **Dichtl, Gottfried**
**Fuststrasse 24**
**D-55268 Nieder-Olm(DE)**

(74) Vertreter: **Andrae, Steffen, Dr. et al**
**Patentanwälte**
**Andrae, Flach, Haug, Kneissl**
**Balanstrasse 55**
**D-81541 München (DE)**

(54) **Verfahren zur Rückgewinnung von hochsiedenden Komponenten aus Abwasser.**

(57) Verfahren zur Rückgewinnung von hochsiedenden Komponenten aus einem Abwasser mittels Extraktion des Abwassers mit einem flüssigen Extraktionsmittel in einer Extraktionsstufe 1 und Rektifikation der dabei erhaltenen Extraktphase in einer Rektifikationsstufe 7, wobei in letzterer ein azeotropes Gemisch 9 aus Wasser und Extraktionsmittel und die extrahierte hochsiedende Komponente 8 in annähernd reiner Form gewonnen werden, bei dem in der Extraktionsstufe 1 der Durchsatz des Extraktionsmittels unter der Berücksichtigung der Flüssig-Flüssig-Gleichgewichte auf einen solchen Wert verringert wird, daß die erhaltene Extraktphase 6, die anschließend der Rektifikation zugeführt wird, gegenüber einer Phase mit dem azeotropen Verhältnis der Anteile von Extraktionsmittel und Wasser einen erhöhten Anteil der abgetrennten hochsiedenden Komponente sowie einen erhöhten Wasseranteil aufweist, und daß in der Rektifikationsstufe 7 das in der der Rektifikationsstufe zugeführten Extraktphase 6 überschüssig vorhandene Wasser über einen flüssigen Seitenstrom 14 aus der Rektifikationsstufe 7 abgeführt und bei einer der Extraktionstemperatur angenäherten Temperatur in die Extraktionsstufe 1 zurückgeführt wird.

EP 0 578 259 A1

3

Feed zu
Extraktion

Abwasser

15

4

2

12

9

14

Seitenabzug

1

6

M

7

2

5

11

8

hochsiedende Komponente

wässriges Raffinat

wässrige Phase

Fig. 2

In der chemischen und pharmazeutischen Industrie entstehen in verschiedenen Produktionszweigen wäßrige Gemische, die höher als Wasser siedende Komponenten (im weiteren als hochsiedende Komponente bezeichnet) enthalten. Diese hochsiedenden Komponenten müssen entweder aus produktionsspezifischen Gründen oder wegen des Umweltschutzes abgetrennt werden. Die Aufbereitung dieser wäßrigen Gemische kann auf verschiedene Weise erfolgen, wobei sich die bekannten Verfahren hinsichtlich der Investitions- und Betriebskosten unterscheiden (s. z.B. Pilhofer Th., Verfahrenstechnik 17 (1983) 9, S.547-549).

Eine kostengünstige Abtrennung gestatten die speziellen Rektifikationsprozesse, wie z.B. Extraktiv- und Azeotroprektifikation. Bei diesen Verfahren wird durch Zugabe eines geeigneten Hilfsstoffes das Gleichgewichtsverhalten des wäßrigen Ausgangssystems derart verändert, daß eine im Vergleich zu dem direkten Destillationsprozeß energetisch günstigere Abtrennung der hochsiedenden Komponente aus Wasser realisiert werden kann. Die speziellen Rektifikationsverfahren sind dabei nicht nur auf die azeotropen Systeme begrenzt.

Die DE 21 39 872 A1 beschreibt ein Verfahren zur Rückgewinnung von reinem Methanol aus Rohmethanol in zwei Rektifikationskolonnen mittels einer extraktiven Rektifikation , bei der die Systemgleichgewichte durch Zugabe von Wasser günstig beeinflußt werden. In der ersten Kolonne wird eine Hauptreinigung durchgeführt. In der zweiten Kolonne erfolgt die Endreinigung des Methanols und die Ausschleusung der noch im System verbliebenen Verunreinigungen durch einen Seitenstrom und Rückführung in die erste Kolonne.

Ein besonderes Verfahren aus dieser Gruppe ist die Azeotroprektifikation mit einer vorgeschalteten Flüssig-Flüssig-Extraktion. Bei diesem Verfahren wird zunächst die hochsiedende Komponente mit einem geeigneten Extraktionsmittel extrahiert. In der nachgeschalteten Rektifikationsstufe folgt dann die energetisch günstige Abtrennung der hochsiedenden Komponente vom Extraktionsmittel. Das Verfahren ist durch geringe Betriebskosten gekennzeichnet und wird industriell bei der Abtrennung von hochsiedenden Komponenten wie z.B. Essigsäure, Phenol, Furfurol, Dimethylformamid (DMF) und n-Methylpyrrolidon (NMP) von Wasser eingesetzt. Der für die Durchführung eines derartigen Verfahrens, z.B. eines Verfahrens zur Abtrennung von Essigsäure aus einem essigsäurehaltigen Abwasser, erforderliche Energieverbrauch ist jedoch immer noch so hoch, daß Verbesserungen wünschenswert erscheinen.

Die DE 35 35 583 A1 offenbart die Rückgewinnung von Essigsäure nach dem konventionellen Verfahren mit azeotroper Fahrweise, wobei die Autoren ausdrücklich darauf verweisen, daß der Rektifikations-Feed ein azeotropes Verhältnis von Extraktionsmittel und Wasser aufweisen muß. Im Falle von Ethylacetat wird dieses Verhältnis durch die Variation der Extraktionsmittelmenge eingestellt.

Es ist Aufgabe der vorliegenden Erfindung, durch eine geeignete Modifikation eines solchen Prozesses ein Verfahren mit einem gegenüber den bisherigen Verfahren deutlich geringeren Energieaufwand zu schaffen, bei dem eine nahezu vollständige Rückgewinnung der hochsiedenden Komponenten aus Abwasser bei gleichzeitiger Abwasserreinigung erreicht wird.

Diese Aufgabe wird bei einem Verfahren der gattungsgemäßen Art dadurch gelöst, daß es die im Kennzeichen des Anspruchs 1 wiedergegebenen Merkmale aufweist.

Nachfolgend soll die Erfindung anhand bevorzugter Ausführungsformen unter Bezugnahme auf Figuren und ein Beispiel noch näher erläutert werden.

In den Figuren zeigen:

**Figur 1** ein Fließschema mit der Stromführung eines konventionellen Verfahrens, und

**Figur 2** ein Fließschema einer Ausführungsform eines erfindungsgemäßen Verfahrens.

Bevor auf die Einzelheiten des erfindungsgemäßen Verfahrens eingegangen wird, soll das bisherige, konventionelle Verfahren vorgestellt werden.

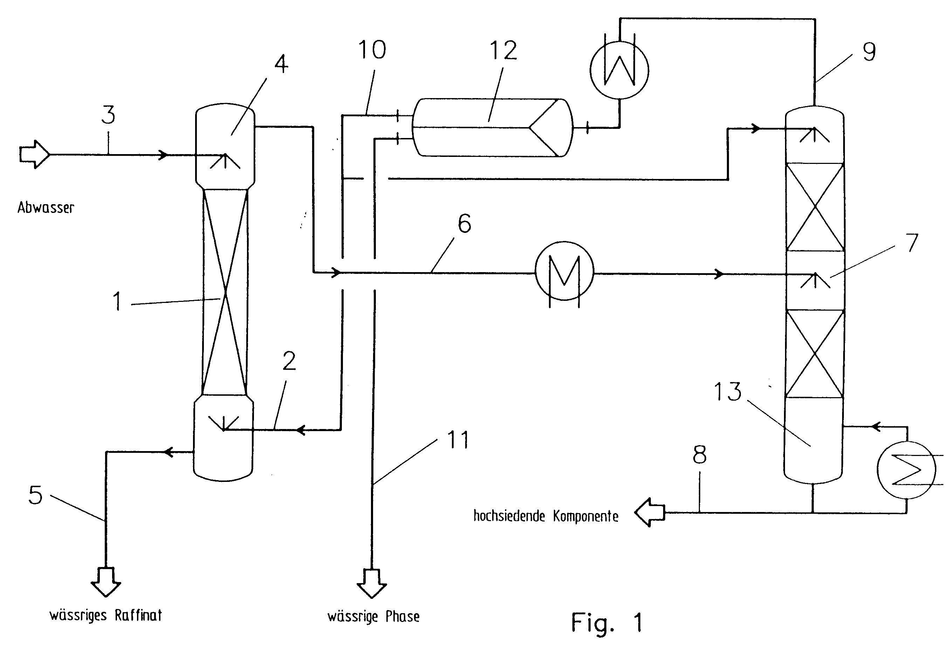

Bezugnehmend auf Figur 1, die die Stromführung eines konventionellen Verfahrens zur Abtrennung hochsiedender Komponenten wie z.B. Essigsäure aus Wasser zeigt, wird bei dem konventionellen Verfahren das aufzuarbeitende Abwassergemisch 3 wird in der Extraktionsstufe in einer Kolonne 1 mit dem Extraktionsmittel 2 in Kontakt gebracht. Unter der Annahme, daß die Wasserphase spezifisch schwerer als das Extraktionsmittel 2 ist, erfolgt die Zuspeisung des Ausgangsgemisches 3 im Kopf 4 der Kolonne 1. Durch die Extraktion wird aus dem Ausgangsgemisch die hochsiedende Komponente ausgewaschen, so daß die die Kolonne verlassende wäßrige Raffinatphase 5 nur einen geringen Anteil an der hochsiedenden Komponente aufweist. Die ablaufende Extraktphase 6 dagegen setzt sich aus der hochsiedenden Komponente, dem Extraktionsmittel und wenig Wasser zusammen. Diese Phase 6 wird der Rektifikationskolonne 7 zugeführt, in der die Abtrennung der hochsiedenden Komponente 8 von dem Extraktionsmittel und dem Wasser erfolgt.

Um die Investitionskosten für die Rektifikationsstufe gering zu halten, wird in den meisten Prozessen ein niedrigsiedendes Extraktionsmittel verwendet. In diesem Fall besitzt das Dreistoffsystem aus der hochsie-

3

denden Komponente, dem Extraktionsmittel und dem Wasser einen azeotropen Punkt mit der niedrigsten Siedetemperatur im System. Bei der Rektifikation des aus der Extraktionsstufe zugeführten Extraktstroms 6 geht daher ein azeotropes Gemisch 9 aus Extraktionsmittel und Wasser und Spuren hochsiedender Komponente über Kopf der Rektifikationskolonne 7. Nach der Kondensation und der Abkühlung der Kopfdämpfe erfolgt die Auftrennung des Gemischs 9 in eine Extraktphase 10 und eine Wasserphase 11 in einem Abscheider 12. Ein Teil der Extraktphase 10 wird zur Einhaltung der Produktreinheit als Rücklauf in die Rektifikationskolonne 7 zurückgeführt. Der restliche Teil des Extraktionsmittels 2 wird zurück in die Extraktionskolonne 1 gefördert. Im Sumpf 13 der Rektifikationskolonne 7 wird eine nahezu reine hochsiedende Komponente 8 abgezogen.

In den meisten Fällen werden die im Prozeß anfallenden wäßrigen Produkte (Raffinatphase 5 und Wasserphase 11 aus dem Abscheider 12) in einem weiteren Verfahrensschritt (Strippung mit Wasserdampf) aufbereitet. In dem Stripper wird das in den wäßrigen Produkten gelöste Extraktionsmittel ausgetrieben und nach der Kondensation und der Abkühlung dem Abscheider zugeführt. Damit werden Extraktionsmittelverluste minimiert. Dieser Verfahrensschritt hat jedoch in Hinblick auf die hier betrachteten Energiekosten keinen nennenswerten Einfluß und wird im weiteren nicht mehr behandelt.

Die Energiekosten des Verfahrens sind von der für die Trennung notwendigen Abdampfrate und somit von dem Rücklaufverhältnis abhängig. Es läßt sich zeigen, daß bei vorgegebener Konzentration der hochsiedenden Komponente im Abwasser der Energiebedarf für das gesamte Verfahren minimal ist, wenn am Kopf der Rektifikationskolonne ein Produkt azeotroper Zusammensetzung abgezogen wird. Unter der Berücksichtigung der geforderten Reinheiten der Produktstöme (Sumpfstrom der Rektifikation und Raffinat der Extraktion) ist somit der Extraktionsmittelbedarf für den energetisch optimalen Betrieb fixiert und somit alle Betriebsparameter des Verfahrens. Abweichungen von diesem Betrieb führen direkt zur Erhöhung des Rücklaufverhältnisses und somit zur Steigerung der Betriebskosten.

Eine Energieeinsparung kann bei dem konventionellen Verfahren durch einen Wechsel des Extraktionsmittels erreicht werden, da hierdurch die Systemeigenschaften (z.B. die Zusammensetzung des Azeotrops) verändert werden. In zahlreichen Veröffentlichungen werden für spezielle wäßrige Ausgangsprodukte, die mit hochsiedenden Komponenten belastet sind, unterschiedliche zur Verfügung stehende Extraktionsmittel verglichen. Dabei werden Eigenschaften wie Löslichkeit in Wasser, Aufnahmekapazität, Verteilungskoeffizient, Preis und Zusammensetzung des Azeotrops gegenübergestellt. Unter Berücksichtigung dieser Eigenschaften hängt die Auswahl des Extraktionsmittels für eine energetisch günstige Prozeßführung von der Zulaufkonzentration der hochsiedenden Komponente im Ausgangsprodukt ab.

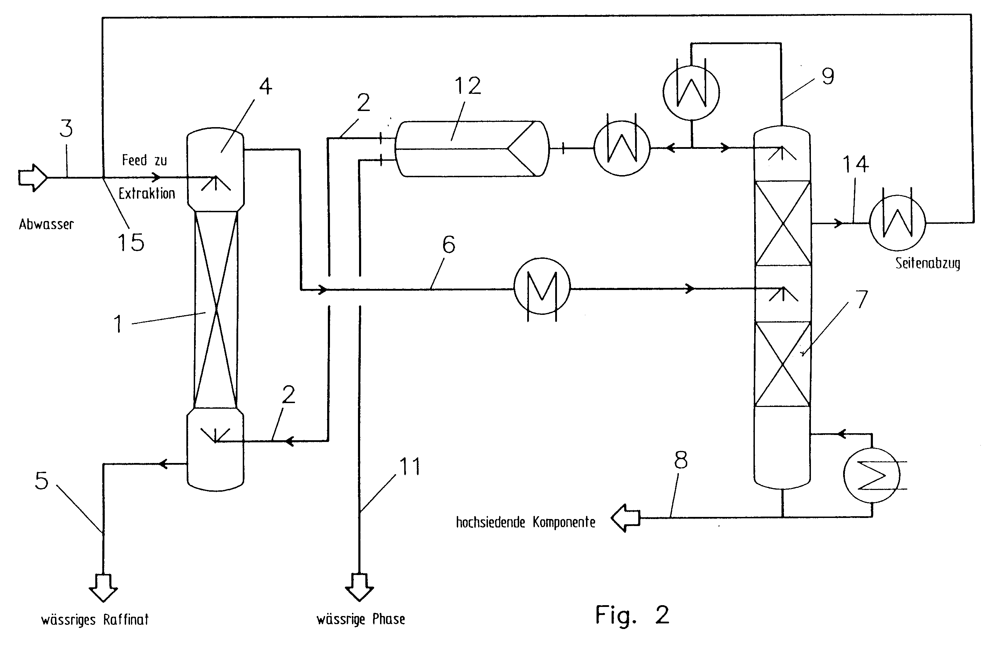

Das Verfahren gemäß der vorliegenden Erfindung setzt sich aus zwei Unit-Operations zusammen und weist den gleichen prinzipiellen Aufbau wie das konventionelle Verfahren auf. In Figur 2 sind daher entsprechende Ströme mit den gleichen Bezugsziffern wie in Figur 1 bezeichnet. Die Besonderheit des erfindungsgemäßen Verfahrens besteht darin, daß in dem Prozeß eine Rückführung vorgesehen wurde, die eine neuartige Prozeßführung ermöglicht.

In der Extraktionskolonne 1 wird ähnlich wie bei dem konventionellen Verfahren die hochsiedende Komponente mit Hilfe eines geeigneten Extraktionsmittels 2 aus dem Abwasserstrom 3 extrahiert. Die Extraktionskolonne 1 wird jedoch so betrieben, daß eine möglichst hohe Konzentration an der hochsiedenden Komponente in der ablaufenden Extraktphase 6 bei gleichzeitiger Erfüllung der geforderten Reinheit des Raffinats 5 erzielt wird. Bei dieser Fahrweise enthält die Extraktphase 6 einen im Vergleich zu dem konventionellen Verfahren wesentlich höheren Anteil an hochsiedender Komponente und somit auch an Wasser, der z.B. jeweils um das 1,5fache bis 2,5fache erhöht sein kann (z.B. bei der Essigsäureabtrennung aus Abwasser ergeben sich z.B. folgende Vergleichswerte: ca. 5% Wasser und ca. 10% Essigsäure beim konventionellen und ca. 10% Wasser und ca. 20% Essigsäure beim erfindungsgemäßen Verfahren). In der nachgeschalteten Rektifikationsstufe in der Rektifikationskolonne 7 erfolgt nun die Auftrennung der Extraktphase 6 in ein Azeotrop 9 aus Extraktionsmittel und Wasser sowie in eine nahezu reine hochsiedende Komponente 8. Das in der Extraktphase 6 überschüssig vorhandene Wasser wird im Verstärkungsteil der Rektifikationskolonne 7 als flüssiger Seitenstrom 14 abgezogen. Der Abzug des Seitenstroms aus der Kolonne kann auf verschiedene Weise erfolgen, wobei folgende Methoden üblich sind: Bei einer Bodenkolonne ein direkter Abzug vom Boden oder ggf. aus dem Ablaufschacht; bei einer Packungskolonne Abzug aus einem speziell eingebauten Sammler. Das als Kopfprodukt der Rektifikationsstufe erhaltene Azeotrop 9 wird einem Abscheider 12 zugeführt. Nach der Phasentrennung wird die organische Phase als Extraktionsmittel 2 in die Extraktionskolonne 1 zurückgeleitet. Die wäßrige Phase 11 wird aus der Anlage entfernt und kann zusammen mit der Raffinatphase einer Nachbehandlung (Strippung des gelösten Extraktionsmittels mit Wasserdampf) unterzogen werden.

Durch eine besonders vorteilhafte Wahl der Abzugstelle sowie des Rücklaufverhältnisses kann im Seitenstrom 14 eine Zusammensetzung eingestellt werden, die in etwa der Abwasser-Zusammensetzung

EP 0 578 259 A1

entspricht. Nach der Abkühlung des Seitenstroms 14 auf die Betriebstemperatur der Extraktionsstufe erfolgt in diesem Falle die Rückführung des Seitenstroms 14 ohne Auftrennung direkt in die Extraktionskolonne 1. Die Lage der Zulaufstelle 15 hängt von dem Anteil der hochsiedenden Komponente im Seitenstrom 14 ab und kann sich oberhalb oder unterhalb der Abwasser-Feedstelle oder auf gleicher Höhe mit der Feedstelle befinden. Die Rückführung des Seitenstroms 14 in die Extraktionskolonne 1 soll an einer Stelle erfolgen, an der der Anteil der hochsiedenden Komponente in der Raffinatphase derjenigen in dem Seitenstrom 14 entspricht.

Bei dem erfindungsgemäßen Verfahren erfolgt die Energieeinsparung aufgrund der Minimierung des Extraktionsmittelbedarfs für die Extraktionsstufe und aufgrund der Ausschleusung des Wassers mit einem Seitenstrom aus der Rektifikationsstufe.

Der Seitenstrom wird gemäß einer Ausführungsform der Erfindung aus dem Verstärkungteil der Rektifikationskolonne(n) flüssig abgezogen und weist nahezu die Zusammensetzung des der Extraktion zugeführten Abwassers auf und wird nach seiner Abkühlung direkt in die Extraktionsstufe zurückgeführt.

Gemäß einer anderen Ausführungsform wird der Seitenstrom zweiphasig abgezogen und nach der Abkühlung und einer Phasentrennung werden die organische Phase in die Rektifikationsstufe und/oder in die Extraktionsstufe und die wäßrige Phase in die Extraktionsstufe zurückgeführt.

Die Zuführung des gesamten Seitenstroms oder des wäßrigen Teils des Seitenstroms in die Extraktionsstufe erfolgt an einer Stelle, an der annähernd der gleiche Anteil der hochsiedenden Komponente vorliegt wie im Seitenstrom bzw. seinem wäßrigen Teil.

Bei dem erfindungsgemäßen Verfahren können die Extraktion und die Rektifikation unabhängig voneinander unter Vakuum, Über- und Normaldruck betrieben werden. In der Extraktionsstufe wird vorzugsweise bei einer Temperatur im Bereich von 0°C bis 120°C gearbeitet. Die Rektifikationstufe kann aus einer Kolonnenkaskade von 1 bis 10 Kolonnen bestehen, und die Extraktionsstufe wird bevorzugt in einer pulsierten oder unpulsierten Kolonne mit geordneten Packungen oder in einer gerührten Kolonne durchgeführt.

**Vergleich des erfindungsgemäßen Verfahrens mit dem konventionellen Verfahren**

Im Vergleich zu dem konventionellen Verfahren weist das erfindungsgemäße Verfahren folgende Vorteile auf:

1) Bei dem erfindungsgemäßen Verfahren können hohe Anteile bzw. Konzentrationen an der hochsiedenden Komponente im Ablauf der Extraktphase eingestellt werden. Die Konsequenz daraus ist, daß die Extraktionsstufe mit einem geringeren Extraktionsmittelbedarf auskommt, wodurch sich ein geringes Volumen für die Extraktionskolonne ergibt. Die kleinere Extraktionskolonne trägt zur Senkung der Investitionskosten der Gesamtanlage bei.

2) Bei dem erfindungsgemäßen Verfahren wird das im Feed der Rektifikationskolonne im Überschuß vorhandene Wasser mit einem flüssigen Seitenabzug aus der Rektifikationskolonne ausgeschleust. Damit kann unabhängig von dem Anteil der hochsiedenden Komponente im Feed einerseits eine hohe Reinheit im Sumpf der Kolonne und andererseits die azeotrope Zusammensetzung im Destillat erreicht werden. Da die Hauptmenge des Wassers aus dem Feed durch den Seitenabzug aus der Kolonne entfernt wird, wird nur eine geringe Menge an Wasser (entsprechend der azeotropen Zusammensetzung) im Kolonnenkopf kondensiert. Die Verdampfungsenthalpie des Wassers verbleibt in der Kolonne. Daraus resultiert ein im Vergleich zu der konventionellen Verfahrensvariante geringerer Gesamtenergiebedarf und somit geringere Betriebskosten.

Das erfindungsgemäße Verfahren wird bei einem größeren Rücklaufverhältnis als das konventionelle Verfahren betrieben. Der hiermit verbundene zusätzliche Energieaufwand ist allerdings im Vergleich zu der Energieeinsparung aufgrund des geringen Extraktionsmittelbedarfs und der Ausschleusung des Wassers durch den Seitenabzug von untergeordneter Bedeutung.

Das Verfahren ist besonders wirtschaftlich bei Abwässern mit einem hohen Anteil an hochsiedender Komponente. Für dieses Verfahren kommen Extraktionsmittel in Betracht, die einerseits guten Extraktionseigenschaften und andererseits einen azeotropen Punkt mit geringem Wasseranteil besitzen.

Nachfolgend wird das erfindungsgemäße Verfahren anhand eines Verfahrens zur Abtrennung von Essigsäure aus einem essigsäurehaltigen Abwasser noch näher erläutert.

**Beispiel**

Als Beispiel wurde ein Prozeß ausgewählt, bei dem ein mit Essigsäure beladenes Abwasser gereinigt werden soll. Das Verfahren basiert auf dem Deutschen Patent 28 064 von Th. Goering aus dem Jahre 1883.

5

In zahlreichen Veröffentlichungen werden die für die Abtrennung geeigneten Extraktionsmittel gegenübergestellt (vgl. z.B. Ricker N.L., King C.J., The American Institute of Chemical Engineers, 178 (1978) 74, S. 204 bis 209 und Lorch H.-W., Vortrag ACHEMA 1991). Für den vorliegenden Fall soll als Extraktionsmittel Methyl-tertiär-butylether (MTBE) und Ethylacetat (ETAC) verwendet werden.

Es liegt folgendes Problem vor. Ein Abwasserstrom von 1000 kg/h mit einem Essigsäure-Massenanteil von 35% soll kostengünstig gereinigt werden. Dabei soll eine 99,9%-ige Essigsäure zurückgewonnen und der Essigsäure-Gehalt im Abwasser auf 0,1% abgereichert werden. Die Investitions- und Betriebskosten für das konventionelle und das erfindungsgemäße Verfahren sollen miteinander verglichen werden.

Die Ergebnisse der Berechnungen sind in der Tabelle 1 zusammengefaßt.

## Tabelle 1

| Extraktionsmittel | konventionelles Verfahren | | erfin-dungs-gemäßes Verfahren | |
|---|---|---|---|---|
| | MTBE | ETAC | MTBE | ETAC |
| Extraktionsmittelbedarf in kg/h | 4819 | 3900 | 2200 | 2178 |
| Anzahl der theor. Stufen | | | | |
| – bei der Rektifikation | 16 | 15 | 18 | 17 |
| – bei der Extraktion | 4 | 4 | 7 | 7 |
| Rücklaufverhältnis | 0,6 | 0,5 | 1,2 | 0,8 |
| Energieverbrauch in kW | | | | |
| – Verdampfer | 907 | 923 | 565 | 776 |
| – Kondensator | 899 | 829 | 536 | 681 |
| – Wärmetauscher für den Seitenstrom | – | – | 23 | 19 |

Wie allein aus den zugeführten Energien und den Massenströmen zu sehen ist, können die Kolonnendurchmesser der Extraktions- bzw. Rektifikationsstufe bei der Anwendung des erfindungsgemäßen Verfahrens deutlich reduziert werden. Da bei beiden Verfahrensvarianten annähernd gleiche Kolonnenhöhen benötigt werden, ist die Verringerung des Kolonnendurchmessers der Senkung der Investitionskosten direkt proportional. Die Betriebskosten können durch die Anwendung des erfindungsgemäßen Verfahrens für das vorliegende Beispiel um ca. 40% gesenkt werden. Die Energie-Einsparung verringert sich mit Abnahme des Essigsäure-Gehalts im Abwasser. Bei Essigsäure-Anteilen von ca. 10% kann im Vergleich zu dem konventionellen Verfahren aber immer noch ca. 15% Energie eingespart werden.

Auch bei der Verwendung des Ethylacetats als Extraktionsmittel kann durch den Einsatz des erfindungsgemäßen Verfahrens bis zu 15% der Gesamtenergie gespart werden. Die geringere Energieeinsparung beruht darauf, daß der azeotrope Punkt des Stoffsystems Ethylacetat/Wasser mehr Wasser als der des Systems MTBE/Wasser enthält. Dadurch muß eine größere Wassermenge im Kopf der Rektifikationskolonne kondensiert werden. Der Energiebedarf für das erfindungsgemäße Verfahren bei Verwendung von Ethylacetat liegt somit höher als beim Einsatz von MTBE.

**Patentansprüche**

**1.** Verfahren zur Rückgewinnung von hochsiedenden Komponenten aus einem Abwasser mittels Extraktion des Abwassers mit einem flüssigen Extraktionsmittel in einer Extraktionsstufe und Rektifikation der dabei erhaltenen Extraktphase in einer Rektifikationsstufe, wobei in letzterer ein azeotropes Gemisch aus Wasser und Extraktionsmittel und die extrahierte hochsiedende Komponente in annähernd reiner Form gewonnen werden, **dadurch gekennzeichnet,**

daß in der Extraktionsstufe der Durchsatz des Extraktionsmittels unter der Berücksichtigung der Flüssig-Flüssig-Gleichgewichte auf einen solchen Wert verringert wird, daß die erhaltene Extraktphase, die anschließend der Rektifikation zugeführt wird, gegenüber einer Phase mit dem azeotropen Verhältnis der Anteile von Extraktionsmittel und Wasser einen erhöhten Anteil der abgetrennten hochsiedenden Komponente sowie einen erhöhten Wasseranteil aufweist, und daß in der Rektifikationsstufe das in der der Rektifikationsstufe zugeführten Extraktphase überschüssig vorhandene Wasser über einen flüssigen Seitenstrom aus der Rektifikationsstufe abgeführt und bei einer der Extraktionstemperatur angenäherten Temperatur in die Extraktionsstufe zurückgeführt wird.

2. Verfahren gemäß Anspruch 1, **dadurch gekennzeichnet,** daß der Seitenstrom aus dem Verstärkungsteil einer oder mehrerer Rektifikationskolonne(n) in flüssiger Form abgezogen wird und nahezu die Zusammensetzung des der Extraktion zugeführten Abwassers aufweist.

3. Verfahren gemäß Anspruch 1 oder 2, **dadurch gekennzeichnet,** daß der Seitenstrom zweiphasig abgezogen wird und daß nach der Abkühlung und einer eventuellen Phasentrennung die organische Extraktionsmittelphase in die Rektifikationsstufe und/oder in die Extraktionsstufe und die wäßrige Phase in die Extraktionsstufe zurückgeführt werden.

4. Verfahren gemäß einem der Ansprüche 1 bis 3, **dadurch gekennzeichnet,** daß die Zuführung des gesamten Seitenstroms oder der abgetrennten wäßrigen Phase des Seitenstroms in die Extraktionsstufe an einer Stelle erfolgt, an der ein annähernd gleicher Anteil der hochsiedenden Komponente vorliegt wie im Seitenstrom oder der abgetrennten wäßrigen Phase.

5. Verfahren gemäß Anspruch 1 bis 4, **dadurch gekennzeichnet,** daß die Extraktion und die Rektifikation unabhängig voneinander unter Vakuum, Über- und/oder Normaldruck betrieben werden.

6. Verfahren gemäß Anspruch 1 bis 5, **dadurch gekennzeichnet,** daß die Extraktionsstufe bei einer Temperatur von 0 °C bis 120 °C durchgeführt wird.

7. Verfahren gemäß Anspruch 1 bis 6, **dadurch gekennzeichnet,** daß die Rektifikationstufe in einer Kolonnenkaskade aus von 1 bis 10 Kolonnen durchgeführt wird.

8. Verfahren gemäß Anspruch 1 bis 7, **dadurch gekennzeichnet,** daß die Extraktionstufe bevorzugt in einer pulsierten oder unpulsierten Kolonne mit geordneten Packungen oder in einer gerührten Kolonne durchgeführt wird.

9. Verfahren gemäß einem der vorausgehenden Ansprüche, **dadurch gekennzeichnet,** daß die aus dem Abwasser abzutrennende hochsiedende Komponente Essigsäure ist.

10. Verfahren nach Anspruch 9, **dadurch gekennzeichnet,** daß der Anteil der Essigsäure im Abwasser im Bereich von 5 bis 50 Gew.-% liegt.

11. Verfahren nach Anspruch 9 oder 10, **dadurch gekennzeichnet,** daß als Extraktionsmittel organische Ether, Ester oder Ketone verwendet werden.

12. Verfahren nach Anspruch 11, **dadurch gekennzeichnet,** daß als Extraktionsmittel Ethylacetat oder Methyl-tert.-butylether verwendet werden.

Fig. 1

EP 0 578 259 A1

Fig. 2

3 Abwasser

Feed zu
Extraktion

15

4

1

5 wässriges Raffinat

2

2

11 wässrige Phase

6

12

M

9

14 Seitenabzug

7

8 hochsiedende Komponente

EP 0 578 259 A1

Europäisches
Patentamt

**EUROPÄISCHER RECHERCHENBERICHT**

Nummer der Anmeldung

EP    93 11 1039

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A,D | DE-A-2 139 872 (TOPSOEE,H.F.)<br>* Anspruch 1; Abbildung * <br>--- | 1-4 | C02F1/26 |
| A | DATABASE WPI<br>Section Ch, Week 3387,<br>Derwent Publications Ltd., London, GB;<br>Class E13, AN 87-230451<br>& HU-A-42 466 (VESZPREMI VEGYPARI) 28. Juli 1987<br>* Zusammenfassung *<br>--- | 1,5,6, 11,12 | |
| A,P | DATABASE WPI<br>Section Ch, Week 1693,<br>Derwent Publications Ltd., London, GB;<br>Class E17, AN 93-134842<br>& ZA-A-9 202 219 (SCHERING AG) 30. Dezember 1992<br>* Zusammenfassung *<br>--- | 1,9-12 | |
| A | DD-A-272 289 (VEB CHEM LEIPZIG GR)<br>* das ganze Dokument *<br><br>----- | 1 | |

**RECHERCHIERTE SACHGEBIETE (Int. Cl.5 )**

C02F

Der vorliegende Recherchenbericht wurde für alle Patentansprüche erstellt

| Recherchenort | Abschlußdatum der Recherche | Prüfer |
|---|---|---|
| DEN HAAG | 24 SEPTEMBER 1993 | GONZÁLEZ ARIAS, M.L. |